# EUROPÄISCHE PATENTSCHRIFT

(11) **EP 1 297 084 B1**
(45) Veröffentlichungstag und Bekanntmachung des Hinweises auf die Patenterteilung: **22.03.2006**
(21) Anmeldenummer: 01945331.5
(22) Anmeldetag: 02.07.2001
(51) Int. Cl.: C09D 175/14, C09D 175/06, C08J 7/04

(54) **THERMISCH UND MIT AKTINISCHER STRAHLUNG HÄRTBARES MEHRKOMPONENTENSYSTEM, VERFAHREN ZU SEINER HERSTELLUNG UND SEINE VERWENDUNG**
MULTICOMPONENT SYSTEM THAT CAN BE CURED THERMALLY OR BY ACTINIC RADIATION, METHOD FOR PRODUCING THE SAME AND THE USE THEREOF
SYSTEME A PLUSIEURS COMPOSANTS DURCISSABLE PAR VOIE THERMIQUE ET PAR RAYONNEMENT ACTINIQUE, PROCEDE PERMETTANT DE LE PRODUIRE ET SON UTILISATION

(30) Priorität: 01.07.2000 DE 10032136
(43) Veröffentlichungstag der Anmeldung: 02.04.2003
(73) Patentinhaber: BASF Coatings AG, 48165 Münster (DE)
(72) Erfinder: BLUM, Rainer, 67069 Ludwigshafen (DE); Allard, Maxime, 48159 Münster (DE)
(74) Vertreter: Fitzner, Uwe
(86) Internationale Anmeldenummer: PCT/EP2001/007517
(87) Internationale Veröffentlichungsnummer: WO 2002/002704

(56) Entgegenhaltungen:
- WO-A-97/25724

## Beschreibung

Die vorliegende Erfindung betrifft ein neues thermisch und mit aktinischer Strahlung härtbares Mehrkomponentensystem. Außerdem betrifft die vorliegende Erfindung ein Verfahren zur Herstellung des neuen thermisch und mit aktinischer Strahlung härtbaren Mehrkomponentensystems. Des weiteren betrifft die vorliegende Erfindung die Verwendung des neuen thermisch und mit aktinischer Strahlung härtbaren Mehrkomponentensystems für die Grundierung von Kunststoffteilen.

Die Lackierung von Kunststoffteilen gewinnt insbesondere in der Kraftfahrzeugindustrie zunehmend an Bedeutung. Ein besonders schnell wachsendes Segment ist hierbei das Gebiet der Kunststoffanbauteile. Indes bereitet die Lackierung von Kunststoffen noch immer große Probleme, die insbesondere durch die ungleichmäßige Oberflächenglätte der Kunststoffteile, die Haftung von Lackierungen auf unterschiedlichen Kunststoffoberflächen sowie die Bildung von Gasblasen und Löchern in den Lackierungen bei der Härtung hervorgerufen werden.

Um diese Probleme zu lösen, werden häufig spezielle Grundierungen aufgebracht, die die Unebenheiten der Kunststoffoberflächen ausgleichen und die Haftung der Lackierungen an den Kunststoffoberflächen sicherstellen sollen. Hierfür werden häufig sogenannte Mehrkomponentensysteme verwendet, bei denen die Vernetzungsmittelkomponente wegen ihrer hohen Reaktivität bis zur Anwendung getrennt von der Bindemittelkomponente gelagert wird. Beispiele für solche Mehrkomponentensysteme sind sogenannte Polyurethansysteme, bei denen die Bindemittelkomponente isocyanatreaktive funktionelle Gruppen und die Vernetzungsmittelkomponente Polyisocyanate enthält.

Der Nachteil dieser Mehrkomponentensysteme ist ihre vergleichsweise lange Reaktionszeit, die insbesondere in der Automobilserienlackierung nicht in Kauf genommen werden kann. Zwar ließe sich die Reaktionszeit durch die Anwendung von Wärme verkürzen, indes handelt man sich dabei wieder das Problem der Blasenbildung ein. Die durch die Gasblasen in den Grundierungen hervorgerufenen Oberflächenstörungen müssen dann wieder durch Nachschleifen beseitigt werden, was aufwendig und teuer ist.

Thermisch und mit aktinischer Strahlung härtbare Mehrkomponentensysteme und ihre Verwendung als Beschichtungsstoffe sind beispielsweise aus der europäischen Patentanmeldung EP 0 928 800 A 1 bekannt. Die bekannten Beschichtungsstoffe enthalten ein Urethan(meth)acrylat, das (Meth)Acrylatgruppen und freie Isocyanatgruppen aufweist, einen die radikalische Polymersiation initiierenden UV-Initiator (Photoinitiator) und eine isocyanatreaktive Verbindung. Als isocyanatreaktive Verbindung kommen Polyole wie Polyester aus Diolen und Triolen sowie Dicarbonsäuren, gehinderte Amine aus Maleinsäureestern und cycloaliphatischen primären Diaminen, Polyetherpolyole oder hydroxylgruppenhaltige (Meth)Acrylatcopolymerisate in Betracht. Die Grundierung von Kunststoffteilen wird in der europäischen Patentanmeldung nicht angesprochen.

In der nicht vorveröffentlichten deutschen Patentanmeldung DE 199 20 799 wird ein Mehrkomponentensystem beschrieben, das thermisch und mit aktinischer Strahlung härtbar ist. Es enthält als Bindemittelkomponente ein hydroxylgruppenfreies Poylurethan mit seitenständigen Acrylatgruppen und ein Polyesterpolyol und als Vernetzungsmittelkomponente ein Acrylatgruppen enthaltendes Polyisocyanat. Das Mehrkomponentensystem dient der Versiegelung von SMC (Sheet Moulded Compounds) und BMC (Bulk Moulded Compounds). Es werden jedoch keine Vernetzungsmittelkomponenten oder Bindemittelkomponenten, die Dicyclopentadienyl-und/oder Endomethylentetrahydrophthalsäure-Gruppen enthalten, verwendet.

In der nicht vorveröffentlichten deutschen Patentanmeldung DE 199 03 725 wird ein Beschichtungsstoff beschrieben, der einen im wesentlichen hydroxylgruppenfreien, ungesättigten Polyester mit Dicyclopentadienyl- und/oder Endomethylentetrahydrophthalsäure-Gruppen und ein hydroxylgruppenfreies, vom Polyester stofflich verschiedenes Polymer, das die vorstehend genannten Gruppen enthalten kann, enthält. Es wird in der Patentanmeldung kursorisch erwähnt, daß der Beschichtungsstoff mit Polyisocyanaten covernetzt werden kann. Wie dies im einzelnen geschehen soll, wird nicht beschrieben. Außerdem soll der bekannte Beschichtungsstoff vor allem als Pulverlack verwendet werden.

Aufgabe der vorliegenden Erfindung ist es, ein neues thermisch und mit aktinischer Strahlung härtbares Mehrkomponentensystem zu finden, das die Nachteile des Standes der Technik nicht mehr länger aufweist, sondern das sich in einfacher Weise applizieren läßt, rasch und zuverlässig bei vergleichsweise tiefen Temperaturen Lackierungen, insbesondere Grundierungen von Kunststoffteilen, liefert, die frei von Oberflächenstörungen wie Blasen und Risse sind, Unebenheiten von Kunststoffoberflächen hervorragend ausgleichen und vorzüglich an den Kunststoffoberflächen sowie an auf die Grundierungen aufgetragenen Lackierungen haften.

Demgemäß wurde das neue, thermisch und mit aktinischer Strahlung härtbare Mehrkomponentensystem gefunden, daß die folgende Komponenten enthält:
- A): Eine isocyanatreaktive Bindemittelkomponente, enthaltend
A 1) mindestens einen ungesättigten Polyester, der im statistischen Mittel mindestens eine mit aktinischer Strahlung aktivierbare Gruppe der Formeln I, II und/oder III 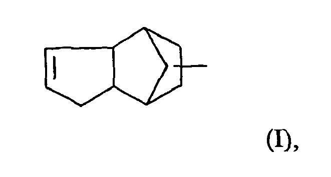 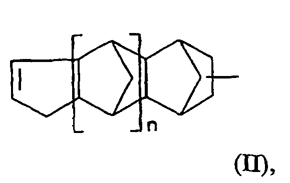 worin der Index n eine ganze Zahl von 1 bis 10 bedeutet; 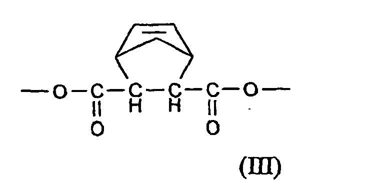 im Molekül enthält; sowie
A 2) mindestens ein vom Polyester (A 1) verschiedenes Bindemittel, das im statistischen Mittel mindestens zwei isocyanatreaktiv funktionelle Gruppen im Molekül enthält, und/oder
A 3) mindestens ein vom Polyester (A 1) verschiedenes Bindemittel, das im statistischen Mittel mindestens eine isocyanatreaktiv funktionelle Gruppe und mindestens eine reaktive funktionelle Gruppe mit mindestens einer mit aktinischer Strahlung aktivierbaren Bindung im Molekül enthält, und
- B): eine Vernetzungsmittelkomponente, enthaltend
B 1) mindestens ein Polyisocyanat und/oder
B 2) mindestens ein Polyisocyanat, das im statistischen Mittel mindestens eine reaktive funktionelle Gruppe mit mindestens einer mit aktinischer Strahlung aktivierbaren Bindung im Molekül enthält.

Im folgenden wird das neue thermisch und mit aktinischer Strahlung härtbare Mehrkomponentensystem als "erfindungsgemäßes Mehrkomponentensystem" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrundeliegt mit Hilfe des erfindungsgemäßen Mehrkomponentensystems gelöst werden konnte. Insbesondere war es überraschend, daß das erfindungsgemäße Mehrkomponentensystem nach seiner Herstellung, d. h. nach dem Vermischen seiner Komponenten, eine für Mehrkomponentensysteme lange Topfzeit oder Verarbeitungszeit aufwies und nach der Applikation trotzdem bei vergleichsweise niedrigen Temperaturen rasch aushärtete, ohne daß die Gefahr der Blasenbildung bestand.

Im Rahmen der vorliegenden Erfindung wird unter aktinischer Strahlung elektromagnetische Strahlung wie nahes Infrarot (NIR), sichtbares Licht oder UV-Licht oder Korpuskularstrahlung wie Elektronenstrahlung verstanden.

Die Härtung mit Wärme und aktinischer Strahlung wird im folgenden mit dem von der Fachwelt üblicherweise angewandten Begriff "Dual Cure" bezeichnet.

Das erfindungsgemäße Mehrkomponentensystem kann zum Zeitpunkt der Applikation in unterschiedlicher physikalischer Form vorliegen. So kann es in der Form einer wäßrigen Lösung oder Dispersion, einer organischen Lösung oder Dispersion, eines im wesentlichen wasser- und lösemittelfreien, flüssigen 100%-Systems, eines im wesentlichen wasser- und lösemittelfreien, feinteiligen, festen Pulverlacks oder einer Pulverlackdispersion (Pulverslurry) vorliegen. Erfindungsgemäß ist es von Vorteil, wenn das erfindungsgemäße Mehrkomponentensystem als flüssiges 100%-System vorliegt.

Der erste wesentliche Bestandteil des erfindungsgemäßen Mehrkomponentensystems ist mindestens eine isocyanatreaktive Bindemittelkomponente (A), die mindestens einen ungesättigten Polyester (A 1) sowie mindestens ein vom Polyester (A 1) verschiedenes Bindemittel (A 2) und/oder (A 3) enthält.

Im Rahmen der vorliegenden Erfindung werden unter Bindemittel oligomere und polymere Harze verstanden, wobei die oligomeren Harze im statistischen Mittel üblicherweise 3 bis 15 Monomereinheiten und die polymeren Harze im statistischen Mittel üblicherweise mehr als 10, insbesondere mehr als 15 Monomereinheiten, pro Molekül enthalten.

Der ungesättigten Polyester (A 1) enthält im statistischen Mittel mindestens eine, vorzugsweise mindestens zwei, mit aktinischer Strahlung aktivierbare Gruppe(n) der Formeln I, II und/oder III. Vorzugsweise werden die Gruppen I und II über die folgenden Ausgangsverbindungen IV bis VIII in die ungesättigten Polyester (A1) eingebaut. 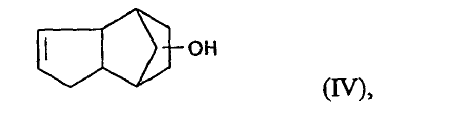 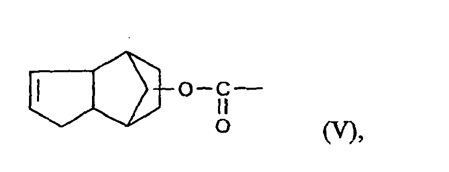 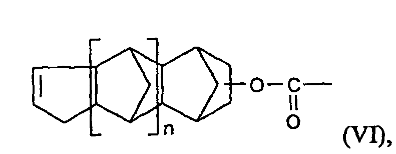 worin der Index n die vorstehend angegebene

Bedeutung hat, 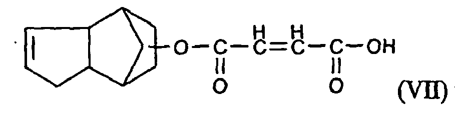 und 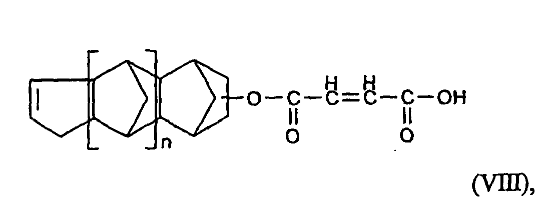 worin der Index n die vorstehend angegebene Bedeutung hat.

Bevorzugt und leicht zugänglich sind die esterartigen Dicyclopentadienyl(DCPD)-Addukte an Polycarbonsäuren, wie sie durch die Formeln V und VI symbolisiert werden. Als Sonderfall dieser DCPD-Addukte resultieren Addukte von Maleinsäureanhydrid und Wasser an DCPD der Formeln VII und VIII. Durch die Mitverwendung solcher Addukte werden besonders bevorzugte ungesättigte Polyester (A 1) erhalten. Des weiteren ist Dihydrodicyclopentadienol IV kommerziell verfügbar und kann beim Aufbau der Polyester (A 1) mitverwendet werden, wodurch ebenfalls die Struktureneinheiten I und II eingeführt werden.

Enthalten die Polyester (A 1) Doppelbindungen in der Polymerkette, z.B. als Maleinsäure- oder Fumarsäureester, so werden durch Pfropfung mit Cyclopentadien Endomethylentetrahydrophthalsäurestrukturen III erzeugt.

Beispiele weiterer geeigneter Ausgangsverbindungen für die Herstellung der Polyester (A 1) sind
- Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellithsäure oder Pyromellithsäure;
- Ethylenglykol, Polyethylenglykole, Propylenglykol, Polypropylenglykole, Butandiolisomere, Hexandiol, Neopentylglykol, Trimethylolpropan, Glyzerin, Pentaerythrit, Bisphenol A oder hydriertes Bisphenol A;
- OH-polyfunktionelle Polymere wie hydroxylgruppenmodifizierte Polybutadienen oder hydroxylgruppentragende Polyurethanpräpolymere und Epoxdharze;
- polyfunktionelle Naturstoffe oder deren Folgeprodukte wie Leinölfettsäure, Dimer- und Polymerleinölfettsäure, Rizinusöl, Rizinusölfettsäure; und/oder
- alkoxylierte hydroxyfunktionelle Verbindungen wie die Ethoxylierungs- und Propoxylierungsprodukte der genannten Polyole.

Weiter ist auch die Einführung von Amid- und Imidstrukturen gemäß den Patentanmeldungen DE 157 0 273 A 1 und DE 172 0 323 A 1 in Polyester (A 1) bekannter Stand der Technik.

Die Einführung der Struktureinheiten I bzw. II erfolgt bevorzugt durch Mitverwendung der vorstehend beschriebenen sauren Ester V bis VIII, insbesondere VII und VIII, bei der Polykondensation.

Weiter ist es möglich Polyester (A 1) mit einem Überschuß von Säure herzustellen und diese dann mit DCPD umzusetzen. Für einen hohen Umsatz ist dabei in der Regel die Verwendung von Katalysatoren z.B. Bortrifluoridetherat notwendig. Bei höheren Temperaturen und Druck werden dabei auch Oligo-DCPD-Strukturen (Straktureinheit II) gebildet.

Enthalten die Polyester (A 1) bei dieser Umsetzung Doppelbindungen in der Polymerkette, z.B. als Maleinsäure- oder Fumarsäureester, so werden durch Pfropfung mit Cyclopentadien Endomethylentetrahydrophthalsäurestrukturen VIII erzeugt.

Von besonderer Bedeutung sind auch Polyester (A 1) gemäß der Patentanmeldung DE 43 21 533 A 1, die unter Mitverwendung von hydroxyfunktionellen Allylethern erhalten werden und eine besonders hohe Photoempfindlichkeit aufweisen. Weiter von Bedeutung sind Polyester (A 1) deren bei der Polykondensation frei gebliebene Carboxylgruppen mit ungesättigten Epoxydverbindungen, bevorzugt Glycidyl(meth)acrylat, umgesetzt werden; auch diese Maßnahme erhöht die Photoempfindlichkeit.

Der Einbau von Photoinitiatorgruppen in die Polyester (A 1) ist möglich beispielsweise durch Mitverwendung von Benzophenontetracarbonsäure, Benzophenontetracarbonsäureanhydrid oder Benzophenontetracarbonsäureester oder 4-Hydroxybenzophenon bei der Polykondensation. Bevorzugt ist es hierbei, mit einem Überschuß von Hydroxylvebindungen zunächst hydroxylterminierte Polyestervorstufen herzustellen und diese mit Benzophenontetracarbonsäureanhydrid umzusetzen. Dabei werden die Benzophenonstrukturen kettenständig in die Polyester (A 1) eingebaut und Carboxylgruppen erzeugt. Ebenfalls bevorzugt ist es, diese Carboxylgruppen dann mit ungesättigten Epoxyverbindungen, bevorzugt Glycidyl(meth)acrylat, umzusetzen.

Der Aufbau der Polyester (A 1), welche speziellen Anforderungen z.B. an Härte, Elastizität, Viskosität oder Erweichungspunkt genügen, erfolgt nach den dem Fachmann bekannten Regeln durch Auswahl der Aufbaukomponenten und Einstellung des Kondensationsgrades. Generell können die in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Resines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, im Detail beschriebenen Verfahren und Vorrichtungen für die Herstellung der Polyester (A 1) angewandt werden.

Dabei kann der Polyester (A 1) mit einem Überschuß von Polyolen hergestellt werden, so daß er freie Hydroxylgruppen aufweist. Es können aber auch die Polyole und die Polycarbonsäuren bezüglich der Hydroxylgruppen oder Carboxylgruppen in einem stöchiometrischen Verhältnis vorliegen, nur daß sie unvollständig auskondensiert werden, so daß noch freie Hydroxylgruppen und Carboxylgruppen vorliegen. Dies hat den Vorteil, daß auch die Polyester (A 1) an der thermische Vernetzung mit den Isocyantagruppen der Komponente (B) teilnehmen können (Dual Cure).

Vorzugsweise weisen die Polyester (A 1) eine Hydroxylzahl von 20 bis 200, insbesondere von 30 bis 120 mg KOH/g auf.

Der Anteil der Polyester (A 1) an den erfindungsgemäßen Mehrkomponentensystemen kann sehr breit variieren. Vorzugsweise liegt er bei 1 bis 60, bevorzugt 2 bis 55, besonders bevorzugt 3 bis 50, ganz besonders bevorzugt 4 bis 45 und insbesondere 5 bis 40 Gew.-%, jeweils bezogen auf den Festkörper des erfindungsgemäße Mehrkomponentensystems.

Im Rahmen der vorliegenden Erfindung bedeutet hier und im folgenden der Begriff "Festkörper" den Anteil des erfindungsgemäße Mehrkomponentensystems, der nach der Aushärtung in der erfindungsgemäßen Grundierung als Festkörper zurückbleibt.

Die isocyanatreaktive Bindemittelkomponente (A) enthält des weiteren mindestens ein vom Polyester (A 1) verschiedenes Bindemittel (A 2), das im statistischen Mittel mindestens eine, insbesondere mindestens zwei, isocyanatreaktive funktionelle Gruppe(n) im Molekül enthält.

Anstelle des Bindemittels (A 2) oder zusätzlich zu diesem enthält die isocyanatreaktive Bindemittelkomponente (A) mindestens ein vom Polyester (A 1) verschiedenes Bindemittel (A 3), das im statistischen Mittel mindestens eine, insbesondere mindestens zwei, isocyanatreaktive funktionelle Gruppe(n) und mindestens eine, insbesondere mindestens zwei, reaktive funktionelle Gruppe(n) mit mindestens einer mit aktinischer Strahlung aktivierbaren Bindung im Molekül enthält. Im folgenden werden die reaktiven funktionellen Gruppen mit mindestens einer mit aktinischer Strahlung aktivierbaren Bindung der Kürze halber als "strahlungsaktive Gruppen" bezeichnet.

Erfindungsgemäß sind die Bindemittel (A 3) von Vorteil, weil sie nach dem Dual Cure-Mechanismus ausgehärtet werden können.

Die Bindemittel (A 2) und (A 3) enthalten die gleichen oligomeren oder polymeren Grundstrukturen, wie sie nachstehend beschrieben werden.

Beispiele geeigneter isocyanatreaktiver funktioneller Gruppen sind Hydroxylgruppen, primäre und sekundäre, insbesondere primäre Aminogruppen und/oder Thiolgruppen. Von diesen sind Hydroxylgruppen von besonderem Vorteil und werden daher erfindungsgemäß bevorzugt verwendet.

Im Rahmen der vorliegenden Erfindung wird unter einer mit aktinischer Strahlung aktivierbaren Bindung eine Bindung verstanden, die beim Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte strahlungsaktive Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der strahlungsaktiven Gruppe vorliegen. Erfindungsgemäß ist es von Vorteil zwei Doppelbindungen, von besonderem Vorteil eine Doppelbindung zu verwenden.

Desweiteren enthalten die Bindemittel (A 3) im statistischen Mittel mindestens eine, insbesondere mindestens zwei, strahlungsaktive Gruppe(n). Welche Funktionalität man wählt, richtet sich einerseits nach den stöchiometrischen Verhältnissen der Ausgangsprodukte der Bindemittel (A 3), die sich andererseits wieder nach deren Anwendungszwecken richten.

Werden im statistischen Mittel mehr als eine strahlungsaktive Gruppe pro Molekül angewandt, sind die mindestens zwei strahlungsaktive Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, strahlungsaktive Gruppen verwendet werden, die sich von zwei, drei, vier oder mehr, insbesondere aber zwei, Monomerklassen ableiten.

Beispiele geeigneter strahlungsaktiver Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen, insbesondere aber Acrylatgruppen.

Die strahlungsaktiven Gruppen sind über Urethan-, Harnstoff-, Allophanat-, Ester-, Ether- und/oder Amidgruppen an die Grundstruktur des Bindemittels (A 3) gebunden. Besonders bevorzugt sind Urethangruppen. Hierfür kommen die folgenden beiden verküpfenden Strukturen IX und X in Betracht:

**Grundstruktur-NH-C(O)-O-strahlungsaktive Gruppe** (IX)

und

**Grundstruktur-O-(O)C-NH-strahlungsaktive Gruppe** ( X).

In dem Bindemittel (A 3) können beide verküpfenden Strukturen IX und X oder nur eine von ihnen vorliegen. Im allgemeinen ist die Struktur IX wegen der größeren Anzahl der zur Verfügung stehenden Ausgangsprodukte und deren vergleichsweise einfacheren Herstellbarkeit von Vorteil und wird deshalb erfindungsgemäß bevorzugt angewandt.

Die strahlungsaktiven Gruppen sind an die Grundstruktur endständig und/oder lateral gebunden. Welche Art der Anbindung gewählt wird, richtet sich insbesondere danach, ob die reaktiven funktionellen Gruppen in der Grundstruktur, mit denen die Ausgangsprodukte der strahlungsaktiven Gruppen zu reagieren vermögen, endständig oder lateral vorliegen. Häufig haben endständige strahlungsaktive Gruppen wegen fehlender sterischer Abschirmung eine höhere Reaktivität als laterale strahlungsaktive Gruppen und werden deshalb bevorzugt verwendet. Andererseits aber kann die Reaktivität des Bindemittels (A 3) über das Verhältnis von endständigen und lateralen strahlungsaktiven Gruppen gezielt gesteuert werden, was ein weiterer besonderer Vorteil des erfindungsgemäßen Mehrkomponentensystems ist.

Die Grundstruktur der Bindemittel (A 2) und (A 3) ist oligomer und/oder polymer. D.h., die Bindemittel (A 2) und (A 3) sind Oligomere oder Polymere oder Gemische hiervon.

Die oligomere oder polymere Grundstruktur enthält aromatische, cycloaliphatische und/oder aliphatische Strukuren bzw. Bausteine oder besteht aus diesen. Vorzugsweise enthält sie cycloaliphatische und/oder aliphatische Strukturen, insbesondere cycloaliphatische und aliphatische Strukturen, oder besteht aus diesen.

Beispiele geeigneter aromatischer Strukturen sind aromatische und heteroaromatische Ringe, insbesondere Benzolringe.

Beispiele cycloaliphatischer Stukturen sind Cyclobutan-, Cyclopentan-, Cyclohexan-, Cycloheptan-, Norbonan-, Camphan-, Cyclooctan- oder Tricyclodecanringe, insbesondere Cyclohexanringe.

Beispiele aliphatischer Strukturen sind linerare oder verzweigte Alkylketten mit 2 bis 20 Kohlenstoffatomen oder Ketten, wie sie aus der (Co)Polymerisation olefinisch ungesättigter Monomere resultieren.

Die Grundstruktur kann außerdem olefinisch ungesättigte Doppelbindungen enthalten.

Die Grundstruktur kann des weiteren chemisch gebundene Stabilisatoren enthalten. Sofern sie mit verwendet werden, sind sie in dem Bindemittel (A 3) in einer Menge von 0,01 bis 1,0 Mol-%, vorzugsweise 0,02 bis 0,9 Mol-%, bevorzugt 0,03 bis 0,85 Mol%, besonders bevorzugt 0,04 bis 0,8 Mol-%, ganz besonders bevorzugt 0,05 bis 0,75 Mol-% und insbesondere 0,06 bis 0,7 Mol-%, jeweils bezogenen auf die in dem Bindemittel (A 3) vorhandenen Doppelbindungen, enthalten.

Bei dem chemisch gebundenen Stabilisator handelt es sich um Verbindungen, die sterische gehinderte Nitroxylradikale (>N-O•) sind oder liefern, die im modifizierten Denisov-Zyklus freie Radikale abfangen.

Beispiele geeigneter chemisch gebundener Stabilisatoren sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist. Ergänzend wird auf das Lehrbuch »Lackadditive« von Johan Bieleman, Wiley-VCH, Weinheim, New York, 1998, Seiten 293 bis 295, verwiesen.

Beispiele geeigneter Ausgangsprodukte für die Einführung der chemisch gebundenen Stabilisatoren sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist und die eine Isocyanatgruppe oder eine isocyanatreaktive funktionelle Gruppe, insbesondere eine Hydroxylgruppe, enthalten. Ein Beispiel für ein besonders gut geeignetes Ausgangsprodukt ist das Nitroxylradikal 2,2,6,6-Tetramethyl-4-hydroxypiperidin-N-oxid.

Die Grundstruktur ist von linearer, verzweigter, hyperverzweigter oder dendrimerer Struktur.

Sie kann mehrbindige, insbesondere zweibindige, funktionelle Gruppen enthalten, durch die die vorstehend beschriebenen Strukturen bzw. Bausteine miteinander zu der Grundstruktur verknüpft werden. Diese werden im allgemeinen so ausgewählt, daß sie die durch die aktinische Strahlung ausgelösten Reaktionen nicht stören oder gar völlig verhindern. Beispiele geeigneter funktioneller Gruppen sind Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen. Von diesen Gruppen sind die Ether-, Carbonsäureester-, Carbonat-, Carbonsäureamid-, Harnstoff-, Urethan-, Imid- und Carbonatgruppen, insbesondere die Carbonsäureester- und die Urethangruppen, von Vorteil und werden deshalb bevorzugt verwendet.

Vorteilhafte oligomere und polymere Grundstrukturen leiten sich somit ab von statistisch, alternierend und/oder blockartig aufgebauten linearen, verzweigten, hyperverzweigten, dendrimeren und/oder kammartig aufgebauten (Co)Polymerisaten von ethylenisch ungesättigten Monomeren, Polyadditionsharzen und/oder Polykondensationsharzen. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (polyaddukte)«, sowie Seiten 463 und 464, »Polykondensate«, »Polykondensation« und »Polykondensationsharze« verwiesen.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polyester-Polyurethane, Polylactone, Polycarbonate, Polyether, Polyester-Polyether, Epoxidharz-Anün-Addukte, Polyharnstoffe, Polyamide oder Polyimide. Von diesen sind die Polyurethane und Polyester-Polyurethane besonders vorteilhaft und werden deshalb erfindungsgemäß ganz besonders bevorzugt verwendet.

Die Herstellung der erfindungsgemäß bevorzugt verwendeten Polyurethane und Polyester-Polyurethane weist keine methodischen Besonderheiten auf, sondern erfolgt mit Hilfe der auf diesem Gebiet üblichen und bekannten Verfahren und Vorrichtungen. Geeignete Verfahren und Vorrichtungen werden beispielsweise in den Patentanmeldungen EP 0 089 497 A 1, EP 0 228 003 A 1, EP 0 354 261 A 1, EP 0 422 357 A 1, EP 0 424 705 A 1 oder EP 0 299 148 A 1 im Detail beschrieben.
Auch der Gehalt der erfindungsgemäßen Mehrkomponentensysteme an den Bindemitteln (A 2) und/oder (A 3) kann sehr breit variieren. Vorzugsweise liegt er bei 1 bis 50, bevorzugt 2 bis 45, besonders bevorzugt 3 bis 40, ganz besonders bevorzugt 4 bis 35 und insbesondere 5 bis 30 Gew.-%, jeweils bezogen auf den Festkörper des erfindimgsgemäßen Mehrkomponentensystems.

Darüber hinaus kann die isocyanatreaktive Bindemittelkomponente (A) noch mindestens einen weiteren Zusatzstoff enthalten.

Zusatzstoffe, die insbesondere für die Verwendung in flüssigen 100%-Systemen geeignet sind, sind thermisch härtbare Reaktiverdünner und mit aktinischer Strahlung aktivierbare Reaktiverdünner.

Sofern verwendet, sind die thermisch härtbaren Reaktiverdünner in der isocyanatreaktiven Bindemittelkomponente (A) enthalten, wogegen die mit aktinischer Strahlung aktivierbaren Reaktiverdünner sowohl in der isocyanatreaktiven Bindemittelkomponente (A) als auch in der Vernetzungsmittekomponente (B) enthalten sein können. Vorzugsweise sind sie in der Bindemittelkomponente (A) enthalten.

Die beiden Arten von Reaktiverdünner können auch als Lösemittel und/oder Dispergiermittel für die übrigen Bestandteile der erfindungsgemäß Mehrkomponentensysteme dienen.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen. Darüber hinaus kommen noch Vinylaromaten, insbesondere Styrol, in Betracht.

Der Anteil der Reaktiverdünner an den erfindungsgemäßen Mehrkomponentensystemen kann sehr breit variieren und richtet sich vor allem nach der Reaktivität, die die Mehrkomponentensysteme aufweist sollen. Vorzugsweise sind sie in den erfindungsgemäßen Mehrkomponentensystemen in einer Menge von 5 bis 70, bevorzugt 6 bis 60, besonders bevorzugt 7 bis 55, ganz besonders bevorzugt 8 bis 50 und insbesondere 9 bis 45 Gew.-%, jeweils bezogen auf den Festkörper des erfindungsgemäße Mehrkomponentensystems, enthalten.

Ansonsten kann die erfindungsgemäß zu verwendende isocyanatreaktive Bindemittelkomponente (A) noch farb- und/oder effektgebende Pigmente und/oder elektrisch leitfähige Pigmente, organische und anorganische, transparente oder opake, elektrisch leitfähige oder nicht leitfähige Füllstoffe, Nanopartikel, niedrig siedende organische Lösemittel und hochsiedende organische Lösemittel ("lange Lösemittel"), UV-Absorber, Lichtschutzmittel, Radikalfänger, thermolabile radikalische Initiatoren, zusätzliche Vernetzungsmittel, Photoinitiatoren und -Coinitiatoren, zusätzliche Bindemittel, Katalysatoren für die thermische Vernetzung, Entlüftungsmittel, Slipadditive, Polymerisationsinhibitoren, Entschäumer, Emulgatoren, Netz- und Dipergiermittel, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel, Vorstufen organisch modifizierter Keramikmaterialien oder zusätzliche Bindemittel enthalten.

Beispiele geeigneter Effektpigmente und/oder elektrisch leitfähiger Pigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende und/oder elektrisch leitfähige Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Für die erfindungsgemäß Mehrkomponentensysteme ist es von Vorteil, elektrisch leitfähige Pigmente wie Titandioxid/Zinnoxid-Pigmente zu verwenden, weil hierdurch die erfindungsgemäß Mehrkomponentensysteme durch elektrostatischen Sprühauftrag (ESTA) appliziert werden können.

Beispiele geeigneter organischer und anorganischer Füllstoffe sind Kreide, Dolomit Calciumsulfate, Bariumsulfat, Silikate wie Talk oder Kaolin, Glimmer, Kieselsäuren, Oxide wie Aluminiumhydroxid, oder Magnesiumhydroxid oder organische Füllstoffe wie Textilfasern, Cellulosefasern, Polyethylenfasem oder Holzmehl. Ergänzend wird auf Römpp Lexikon Lacke und Druckfarben, Georg Thieme Verlag, 1998, Seiten 250 ff., »Füllstoffe«, verwiesen.

Für die erfindungsgemäßen Mehrkomponentensysteme ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Des weiteren ist es für die erfindungsgemäßen Mehrkomponentensysteme von Vorteil, die Füllstoffe oder einen Teil der Füllstoffe in mit aktinischer Strahlung härtbaren Reaktivverdünnern dispergiert zu verwenden.

Beispiele geeigneter zusätzlicher Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, blockierte Polyisocyanate, wie sie beispielsweise in den Patentschriften US 4,444,954 A 1, DE 196 17 086 A 1 , DE 196 31 269 A 1 , EP 0 004 571 A 1 oder EP 0 582 051 A 1 beschrieben werden, und/oder Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Beispiele geeigneter niedrigsiedender organischer Lösemittel und hochsiedender organischer Lösemittel ("lange Lösemittel") sind Ketone wie Methylethlyketon oder Methylisobutylketon, Diole wie Butylglykol, Ester wie Ethylacetat, Butylacetat oder Butylglykolacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder-dibutylether, N-Methylpyrrolidon oder Xylole oder Gemische aromatischer Kohlenwasserstoffe wie Solventnaphtha® oder Solvesso®.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Lithiumdecanoat, -oleat und/oder -stearat oder Zinkoctoat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Die zusätzlichen Bindemittel unterscheiden sich strukturell von den Bindemitteln (A 1), (A 2) und (A 3). Beispiele geeigneter zusätzlicher Bindemittel sind oligomere und polymere, lineare und/oder verzweigte und/oder blockartig, kammartig und/oder statistisch aufgebaute (Co)Polymerisate von ethylenisch ungesättigten Monomeren, oder Polyadditionsharze und/oder Polykondensationsharze, wie Poly(meth)acrylate oder Acrylatcopolymerisate, Polyester, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, Polyester-Polyurethane oder Polyharnstoffe.

Beispiele für geeignete Entlüftungsmittel sind Diazadicycloundecan oder Benzoin.

Beispiele geeigneter Emulgatoren sind nicht ionische Emulgatoren, wie alkoxylierte Alkanole und Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen und Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter transparenter Füllstoffe und/oder Nanopartikel sind solche auf der Basis von Siliziumdioxid, Aluminiumoxid oder Zirkoniumoxid; ergänzend wird noch auf Römpp Lexikon Lacke und Druckfarben, Georg Thieme Verlag, Stuttgart, 1998, Seiten 250 bis 252, verwiesen.

Beispiele geeigneter Sag control agents sind Harnstoffe, modifizierte Harnstoffe und/oder Kieselsäuren, wie sie beispielsweise in den Literaturstellen EP 0192 304 A1, DE 23 59 923 A 1, DE 18 05 693 A1, WO 94/22968, DE 27 51 761 C 1, WO 97/12945 oder "farbe + lack", 11/1992, Seiten 829 ff., beschrieben werden.

Beispiele geeigneter rheologiesteuernder Additive sind die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

Ein Beispiel für ein geeignetes Mattierungsmittel ist Magnesiumstearat.

Beispiele geeigneter Vorstufen für organisch modifizierte Keramikmaterialien sind hydrolysierbare metallorganische Verbindungen insbesondere von Silizium und Aluminium.

Weitere Beispiele für die vorstehend aufgeführten Zusatzstoffe sowie Beispiele geeigneter UV-Absorber, Radikalfänger, Verlaufmittel, Flammschutzmittel, Sikkative, Trocknungsmittel, Hautverhinderungsmittel, Korrosionsinhibitoren und Wachse werden in dem Lehrbuch »Lackadditive« von Johan Bieleman, Wiley-VCH, Weinheim, New York, 1998, im Detail beschrieben.

Die erfindungsgemäß zu verwendende isocyanatreaktive Bindemittelkomponente (A) kann selbst in der Form eines Mehrkomponentensystems vorliegen, d. h., daß ihre vorstehend beschriebenen Bestandteile bis zur Verwendung getrennt voneinander gelagert werden. So können beispielsweise die Bindemittel (A 1) getrennt von den Bindemitteln (A 2) und/oder (A 3) gelagert werden. Erfindungsgemäß ist es indes von Vorteil, alle Bestandteile in einer isocyanatreaktiven Bindemittelkomponente (A) zusammenzufassen. Sofern die Vernetzungsmittelkomponente (B) ebenfalls eine Komponente im vorstehenden Sinne bildet, resultiert das erfindungsgemäße Zweikomponentensystem.

Methodisch gesehen weist die Herstellung der erfindungsgemäß zuverwendenden isocyanatreaktiven Bindemittelkomponente (A) keine Besonderheiten auf, sondern erfolgt mit Hilfe der üblichen und bekannten Vorrichtungen und Verfahren für die Herstellung von Pulverlacken, Pulverslurries, flüssigen 100%-Systemen, wäßrigen Lacken oder konventionellen Lacken, wobei übliche und bekannte Mischaggregate wie Rührkessel, Dissolver, In-Line-Dissolver, Zahnkranzdispergatoren, Rührwerksmühlen oder Extruder angewandt werden.

Der weitere erfindungswesentliche Bestandteil des erfindungsgemäßen Mehrkomponentensystems ist mindestens eine Vernetzungsmittelkomponente (B).

Die Vernetzungsmittelkomponente enthält mindestens ein Polyisocyanat (B 1).

Die Anzahl der Isocyanatgruppen in den Polyisocyanaten ist (B 1) nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate (B 1) sind isocyanatgruppenhaltige Polyurethanpräpolymere, die durch Reaktion von Polyolen mit einem Überschuß an vorzugsweise aliphatischen und cycloaliphatischen Diisocyanaten hergestellt werden können und bevorzugt niederviskos sind. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter cycloaliphatischer Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan,1-Isocyanato-2-(3-isocyanatoeth-1-yl)cyclohexan,1-Isocyanato-2-(4-isocyanatobut-1-yl)-cyclohexan, 1,2-Diisocyanatocyclobutan, 1,3-Düsocyanatocyclobutan, 1,2-Diisocyanatocyclopentan, 1,3-Düsocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan.

Von diesen ist Hexamethylendiisocyanat von besonderem Vorteil und wird deshalb erfindungsgemäß ganz besonders bevorzugt verwendet.

Es können auch Isocyanurat-, Biuret-, Allophanat-, Iminooxadiazindion-, Urethan-, Harnstoff-, Carbodiimid und/oder Uretdiongruppen aufweisende Polyisocyanate (B 1) verwendet werden, die in üblicher und bekannter Weise aus den vorstehend beschriebenen Diisocyanaten hergestellt werden. Beispiele geeigneter Herstellungsverfahren und Polyisocyanate sind beispielsweise aus den Patentschriften und Patentanmeldungen CA 2,163,591 A, US 4,419,513 A, US 4,454,317 A, EP 0 646 608 A 1, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1 oder EP 0 531 820 A 1 bekannt.

Die erfindungsgemäß zu verwendende Vernetzungsmittelkomponente (B) enthält anstelle der Polyisocyanate (B 1) oder zusätzlich zu diesen mindestens ein Polyisocyanat (B 2), das im statistischen Mittel mindestens eine, vorzugsweise mindestens zwei, der vorstehend beschriebenen strahlungsaktiven Gruppen im Molekül enthält.

Die Polyisocyanate (B 2) sind erhältlich durch die Umsetzung der vorstehend beschriebenen Polyisocyanaten (B 1) mit Verbindungen, die mindestens eine, insbesondere eine, der vorstehend beschriebenen mit aktinischer Strahlung aktivierbaren Bindungen und mindestens eine, insbesondere eine, der vorstehend beschriebenen isocyanatreaktiven Gruppen enthalten.

Beispiele geeigneter Verbindungen, die mindestens eine mit aktinischer Strahlung aktivierbare Bindung und mindestens eine isocyanatreaktive Gruppe enthalten, sind
- Allylalkohol oder 4-Butylvinylether;
- Hydroxyalkylester der Acrylsäure oder der Methacrylsäure, insbesondere der Acrylsäure, die durch Veresterung aliphatischer Diole mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxynaethyl)cyclohexanacrylat oder - methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder-cycloalkylestern.

Die Polyisocyanate (B 1) werden mit den Verbindungen, die mindestens eine mit aktinischer Strahlung aktivierbare Bindung und mindestens eine isocyanatreaktive Gruppe enthalten, in einem Molverhältnis umgesetzt, daß im statistischen Mittel noch mindestens eine freie Isocyanatgruppe pro Molekül verbleibt.

Methodisch gesehen weist diese Umsetzung keine Besonderheiten auf, sondern erfolgt wie beispielsweise in der europäischen Patentschrift EP 0 928 800 A 1 beschrieben.

Erfindungsgemäß ist es von Vorteil, die Polyisocyanate (B 2) in den erfindungsgemäßen Mehrkomponentensystemen zu verwenden, weil sie dann an dem Dual Cure-Härtungsmechanismus teilnehmen können.

Die Vernetzungsmittelkomponente (B) kann darüber hinaus mindestens einen der vorstehend beschriebenen Zusatzstoffe enthalten, solange dieser nicht isocyanatreaktiv ist. Vorzugsweise werden inerte organische Lösemittel verwendet, wenn die Viskosität der Vernetzungsmittelkomponente (B) gezielt verändert, insbesondere verringert, werden soll, um ihre Einarbeitung in die Bindemittelkomponente (A) zu erleichtern.

Der Gehalt der erfindungsgemäßen Mehrkomponentensystemene an den erfindungsgemäß zu verwendenden Polyisocyanaten (B 1) und/oder (B 2) kann sehr breit variieren. Er richtet sich insbesondere nach der Funktionalität und der Menge der isocyanatreaktiven Bindemittelkomponente (A). Vorzugsweise liegt der Gehalt bei 1 bis 50, bevorzugt 2 bis 45, besonders bevorzugt 3 bis 40, ganz besonders bevorzugt 4 bis 35 und insbesondere 5 bis 30 Gew.%, jeweils bezogen auf den Festkörper des erfindungsgemäßen Mehrkomponentensystems.

Auch die Herstellung des erfindungsgemäßen Mehrkomponentensystems aus der isocyanatreaktiven Bindemittelkomponente (A) und der Vernetzungsmittelkomponente (B) bietet keine methodischen Besonderheiten, sondern erfolgt nach den üblichen und bekannten Methoden, beispielsweise durch Vermischen per Hand oder mechanisch in geeigneten Mischaggregaten wie Rührkessel, Zahnkranz-Dispergieraggregaten oder Homogenisierungsdüsen.

Zwar kommen die erfindungsgemäßen Mehrkomponentensysteme für alle Anwendungen auf den Gebieten der Lackierung, insbesondere in der Automobilerstlackierung, der Automobilreparaturlackierung, der Lackierung von Bauten im Innen- und Außenbereich, der Lackierung von Möbeln, Türen oder Fenstern, der industriellen Lackierung, inklusive Coil Coating und Container Coating sowie der Beschichtung und/oder Imprägnierung von elektrotechnischen Bauteilen, in Betracht, wobei sie zur Herstellung von Grundierungen, Füllerlackierungen, farb- und/oder effektgebende Decklackierungen und Basislackierungen oder Klarlackierungen verwendet werden können, indes entfalten sie ihre besonderen Vorteile bei der Grundierung von Kunststoffteilen.

Die Kunststoffteile können aus Kunststoffen wie ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, PPE/PS, PA, PPE/PA, POM, PUR-RIM, SMC, BMC, PP-EPDM und UP (Kurzbezeichnungen nach DIN 7728T1), deren Polymerblends oder den entsprechenden glasfaserverstärkten oder kohlenstoffaserverstärkten Kunststoffen bestehen. Vorzugsweise werden Kunststoffteile, wie sie üblicherweise im Kraftfahrzeugkarosserienbau verwendet werden, mit den erfindungsgemäßen Mehrkomponentensystemen lackiert bzw. grundiert.

Die Applikation des erfindungsgemäßen Mehrkomponentensystems kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation oder elektrostatischer Sprühauftrag (ESTA).

Bevorzugt wird die Applikation bei Beleuchtung mit sichtbarem Licht einer Wellenlänge von über 550 µm oder unter Lichtausschluß durchgeführt. Hierdurch werden eine stoffliche Änderung oder Schädigung des erfindungsgemäßen Mehrkomponentensystems vermieden.

Im allgmeinen werden das erfindungsgemäße Mehrkomponentensystem in einer Naßschichtdicke appliziert, daß nach seiner Aushärtung Grundierungen mit der für ihre Funktionen notwendigen und vorteilhaften Schichtdicken resultieren. Vorzugsweise liegen die Schichtdicken bei 5 bis 100, bevorzugt 6 bis 90, besonders bevorzugt 7 bis 80, ganz besonders bevorzugt 8 bis 70 und insbesondere 9 bis 60 µm.

Im Rahmen des erfindungsgemäßen Verfahrens wird die Schicht aus dem erfindungsgemäßen Mehrkomponentensystem nach seiner Applikation thermisch und mit aktinischer Strahlung ausgehärtet.

Im Rahmen des erfindungsgemäßen Verfahrens kann die Härtung unmittelbar nach der Applikation der Schicht aus dem erfindungsgemäßen Mehrkomponentensystemen erfolgen.

Die Aushärtung kann aber auch nach einer gewissen Ruhezeit oder Ablüftzeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie gegebenenfalls noch vorhandenem Lösemittel.

Vorzugsweise wird bei der Härtung mit aktinischer Strahlung eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Schicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinffächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR- oder NIR-Lampen. Wie bei der Härtung mit aktinischer Strahlung kann auch die thermische Härtung stufenweise erfolgen. Vorteilhafterweise erfolgt die thermische Härtung bei Temperaturen unterhalb 100°C, vorzugsweise 90°C. Besonders bevorzugt wird die thermische Härtung zwischen 40 und 80°C durchgeführt.

Thermische Härtung und Härtung mit aktinischer Strahlung werden gleichzeitig oder nacheinander angewandt. Werden die beiden Härtungsmethoden nacheinander verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Ggf. kann die Dual Cure noch durch eine Wärmelagerung, beispielsweise bei 40 bis 80°C während einer Stunde oder bis zu mehreren Tagen, ergänzt oder beendet werden.

Die besonders vorteilhaften Eigenschaften des erfindungsgemäßen Mehrkomponentensystems machen Durchlaufgeschwindigkeiten von 10 m/min und mehr möglich. Wegen der milden Bedingungen, die bei der Härtung angewandt werden können, werden trotz hoher Produktivität Grundierungen in einer Automobil-Class-A-Oberflächengüte erhalten. Die erfindungsgemäßen grundierten Kunststoffanbauteile überstehen nach dem Anbau an die Kraftfahrzeugkarosserien sofort oder nach beliebig langer Zwischenlagerung alle üblichen Prozesse der Automobillackierung wie die Elektrotauchlackierung oder die Beschichtung mit Füllerlackierungen, Basislackierungen, Klarlackierungen oder Unidecklackierungen.

Die vollständig lackierten, erfindungsgemäßen grundierten Kunststoffanbauteile weisen eine hervorragende Oberfläche sowie vorzügliche optische Eigenschaften auf. Die Haftung der erfindungsgemäßen Grundierung an der Kunststoffobertläche einerseits und der auf ihr befindlichen Lackierung andererseits ist hervorragend. Die erfindungsgemäßen grundierten Grundstoffanbauteile erfüllen deshalb alle Anforderungen der modernen Kraftfahrzeuglackierung.

### Beispiele

### Herstellbeispiel 1

### Die Herstellung der Monocarbonsäure (VII)

In einem Rührkolben mit Heizung und Rückflußkühler wurden eingewogen:

| | |
|---|---|
| 710,81 g Dicyclopentadien (93prozentig) | (5,0 Mol) und |
| 490,30 g Maleinsäureanhydrid | (5,0 Mol). |

Die Mischung wurde unter einem leichten Stickstoffstrom auf 125°C erhitzt. Anschließend wurden über einen Tropftrichter während einer Stunde

| | |
|---|---|
| 95,00 g Wasser | (5,0 Mol + 5 g) |

zugegeben. Es wurde bei 125°C eine Stunde nachreagieren gelassen. Es bildete sich die Monocarbonsäure (VII):

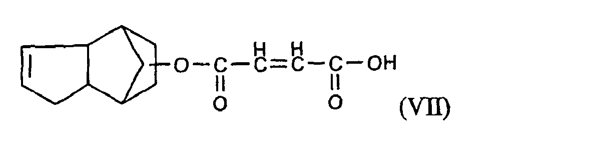

### Herstellbeispiel 2

### Die Herstellung eines erfindungsgemäß zu verwendenden Polyesters (A 1)

In einen Rührkolben, ausgerüstet mit Heizung und Destillieraufsatz, wurde die folgenden Ausgangsverbindungen eingewogen:
315,00 g Triethylenglykol (2,1 Mol),
134,00 g Diethylenglykolmonoethylether (1 Mol),
516,80 g der Monocarbonsäure (VII) des Herstellbeispiels 1 (2 Mol),
156,60 g Fumarsäure (1,35 Mol),
87,36 g Benzophenontretracarbonsäuredi(ethylhexylester) (0,15 Mol),
4,00 g Fascat® 4201 (handelsüblicher Veresterungskatalysator) und
0,50 g Hydrochinon.

Die Reaktionsmischung wurde unter einem leichten Stickstoffstrom rasch auf 130°C aufgeheizt. Anschließend wurde während 4,5 Stunden die Temperatur allmählich auf 190°C erhöht. Dabei wurde das entstehende Kondensationswasser abdestilliert.

Es resultierte ein flüssiger Polyester (A 1) mit einer Säurezahl von 9,7 mg KOH/g, einer Hydroxylzahl von 59 mg KOH/g und einer Viskosität und 7.220 mPas bei 25°C.

### Herstellbeispiel 3

### Die Herstellung eines erfindungsgemäß zu verwendenden Polyesters (A 1) mit erhöhter Flexibilität

In einen Rührkolben, ausgerüstet mit Heizung und Destillieraufsatz, wurden die folgenden Ausgangsverbindungen eingewogen:
1.44 1,5 g Maleinsäureanhydrid (17,7 Mol),
546,6 g Imidol 6 (Diethanolaminmaleinimid) (2,8 Mol) und
56 g Wasser (3,1 Mol).

Die Vorlage wurde auf 90°C erwärmt, worauf eine exotherme Reaktion erfolgte.

Unmittelbar anschließend wurde der Zulauf 1 (398 g Dicyclopentadien, 93 prozentig, 2,8 Mol) während 30 Minuten bei 116 bis 128°C zu der Vorlage zudosiert. Die resultierende Mischung wurde während einer Stunde bei 125°C gehalten.

Hiernach wurde die Heizung entfernt, und es wurde die Mischung, bestehend aus
491,0 g Rizinusöl (Hydroxylzahl: 160 mg KOH/g),
1.040,0 g 2-Methyl-propandiol-1,3 (11,58 Mol) und
7,4 g Fascat® 4201,
eingerührt. Die resultierende Reaktionsmischung wurde unter einem leichten Stickstoffstrom rasch auf 130°C aufgeheizt. Dann wurde während 6 Stunden die Temperatur allmählich auf 190°C erhöht, wobei das resultierende Kondensationswasser abdestilliert wurde.

Es wurde ein flüssiger Polyester (A 1) mit einer Säurezahl von 7,8 mg KOH/g und einer Hydroxylzahl von 92 mg KOH/g und einer Viskosität von 224 Pas bei 25°C erhalten.

### Beispiel 1

### Die Herstellung eines erfindungsgemäßen Zweikomponentensystems

Die Bindemittelkomponente (A) wurde durch Vermischen der unten angegebenen Bestandteile in der angegebenen Reihenfolge in einem schnellaufenden Dissolver hergestellt:
50 Gewichtsteil Styrol,
36 Gewichtsteile des Polyesters (A 1) des Herstellbeispiels 2,
22 Gewichtsteile Ebecryl® IRR 351 [(A 3); handelsübliches hydroxylgruppenhaltiges Polyurethanacrylat der Firma UCB],
12 Gewichtsteile Talkum AT,
16,4 Gewichtsteile Dolomit,
10 Gewichtsteile Dental® W 500 (handelsübliches, elektrisch leitfähiges Titandioxid/Zinnoxid-Pigment der Firma Otosuka Ltd.),
0,4 Gewichtsteile Irgacure® 184 (handelsüblicher Photoinitiator),
4 Gewichtsteile Aerosil® 200-Gel (handelsübliches pyrogenes Siliziumdioxid, 10prozentig in Styrol),
6 Gewichtsteile Bentone®-Gel (handelsüblicher Bentonit, 10 prozentig in Styrol),
0,2 Gewichtsteile Disparlon® LLC (handelsübliches Netzmittel
der Firma Kosumoto Ltd.) und
0,4 Gewichtsteile Nuodex® Li (handelsüblicher Katalysator für die thermische Vernetzung NCO/OH).

Die resultierende Bindemittelkomponente (A) war völlig lagerstabil.

Die Bindemittelkomponente (A) wurde mit 27 Gewichtsteilen des handelsüblichen Acrylatgruppen enthaltenden Polyisocyanats Roskydal® 2337 der Firma Bayer AG (B 2) vermischt.

Das resultierende erfindungsgemäße Zweikomponentensystem wies eine Topfzeit bzw. Verarbeitungszeit von mehr als 36 Stunden auf. Trotzdem konnte es nach seiner pneumatischen Applikation mit einer Becherpistole auf Kunststoffteile bei 60°C innerhalb von fünf Minuten durch Bestrahlung mit UV-Licht vollständig gehärtet werden. Es resultierten erfindungsgemäße Grundierungen mit einer Trockenschichtdicke von 30 µm. Diese wiesen eine hervorragende, glatte Oberfläche und eine hervorragende Haftfestigkeit zu den Kunststoffoberflächen auf. Außerdem konnten sie problemlos überlackiert werden. Die Zwischenschichthaftung war ebenfalls hervorragend.

### Beispiel 2

### Die Herstellung eines erfindungsgemäßen Zweikomponentensystems

Die Bindemittelkomponente (A) wurde durch Vermischen der unten angegebenen Bestandteile in der angegebenen Reihenfolge in einem schnellaufenden Dissolver hergestellt:
50 Gewichtsteil Hexandioldiacrylat,
42 Gewichtsteile des Polyesters (A 1) des Herstellbeispiels 3,
17 Gewichtsteile Ebecryl® IRR 351 [(A 3); handelsübliches hydroxylgruppenhaltiges Polyurethanacrylat der Firma UCB],
12 Gewichtsteile Talkum AT,
16,4 Gewichtsteile Dolomit,
10 Gewichtsteile Dental® W 500 (handelsübliches, elektrisch leitfähiges Titandioxid/Zinnoxid-Pigmente der Firma Otosuka Ltd.),
1,9 Gewichtsteile Irgacure® 1850 (handelsüblicher Photoinitiator),
4,5 Gewichtsteile Aerosil® 200-Gel (handelsübliches pyrogenes Siliziumdioxid, 10prozentig in Styrol),
5,5 Gewichtsteile Bentone®-Gel (handelsüblicher Bentonit, 10prozentig in Styrol),
0,3 Gewichtsteile Disparlon® LLC (handelsübliches Netzmittel der Firma Kosumoto Ltd.) und
0,4 Gewichtsteile Nuodex® Li (handelsüblicher Katalysator für die thermische Vernetzung NCO/OH).

Die resultierende Bindemittelkomponente (A) war völlig lagerstabil.

Die Bindemittelkomponente (A) wurde mit 31 Gewichtsteilen des handelsüblichen Acrylatgruppen enthaltenden Polyisocyanats Roskydal® 2337 der Firma Bayer AG (B 2) vermischt.

Das resultierende erfindungsgemäße Zweikomponentensystem wies ebenfalls eine Topfzeit bzw. Verarbeitungszeit von mehr als 36 Stunden auf. Trotzdem konnte es nach seiner pneumatischen Applikation mit einer Becherpistole auf Kunststoffteile bei 60°C innerhalb von 6 Minuten durch Bestrahlung mit UV-Licht vollständig gehärtet werden. Es resultierten erfindungsgemäße Grundierungen mit einer Trockenschichtdicke von 55 µm. Diese wiesen eine hervorragende, glatte Oberfläche und eine hervorragende Haftfestigkeit zu den Kunststoffoberflächen auf. Außerdem konnten sie problemlos überlackiert werden. Die Zwischenschichthaftung war ebenfalls hervorragend.

## Patentansprüche

1. hermisch und mit aktinischer Strahlung härtbares Mehrkomponentensystem, enthaltend
A) eine isocyanatoreaktive Bindemittelkomponente, enthaltend
A1) mindestens einen ungesättigten Polyester, der im statistischen Mittel mindestens eine mit aktinischer Strahlung aktivierbare Gruppe der Formeln I, II und/oder III 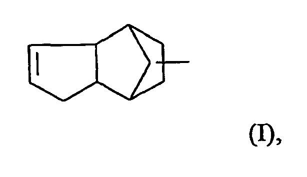 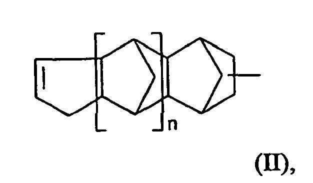 worin der Index n eine ganze Zahl von 1 bis 10 bedeutet; 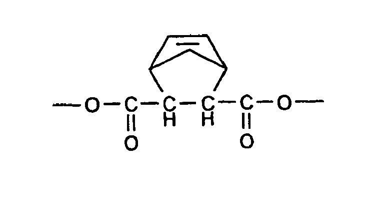 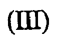 im Molekül enthält; sowie
A 2) mindestens ein vom Polyester (A 1) verschiedenes Bindemittel, das im statistischen Mittel mindestens zwei isocyanatreaktiv funktionelle Gruppen im Molekül enthält,
und/oder
A 3) mindestens ein vom Polyester (A 1) verschiedenes Bindemittel, das im statistischen Mittel mindestens eine isocyanatreaktiv funktionelle Gruppe und mindestens eine reaktive funktionelle Gruppe mit mindestens einer mit aktinischer Strahlung aktivierbaren Bindung im Molekül enthält,
und
B) eine Vernetzungsmittelkomponente, enthaltend
B 1) mindestens ein Polyisocyanat und/oder
B 2) mindestens ein Polyisocyanat, das im statistischen Mittel mindestens eine reaktive funktionelle Gruppe mit mindestens einer mit aktinischer Strahlung aktivierbaren Bindung im Molekül enthält.

2. Mehrkomponentensystem nach Anspruch 1, **dadurch gekennzeichnet, daß** die Bindemittelkomponente (A) mindestens einen thermisch härtbaren Reaktiverdünner enthält.

3. Mehrkomponentensystem nach Anspruch 1 oder 2, **dadurch gekennzeichnet, daß** die Bindemittelkomponente (A) und/oder die Vernetzungsmittelkomponente (B) mindestens einen mit aktinischer Strahlung aktivierbaren Reaktiverdünner enthält.

4. Mehrkomponentensystem nach einem der Ansprüche 1 bis 3, **dadurch gekennzeichnet, daß** es sich bei den mit aktinischer Strahlung aktivierbaren Bindungen um Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen, insbesondere um Kohlenstoff-Kohlenstoff-Doppelbindungen, handelt.

5. Mehrkomponentensystem nach Anspruch 4, **dadurch gekennzeichnet, daß** es sich bei den mit aktinischer Strahlung aktivierbaren Bindungen um Kohlenstoff-Kohlenstoff-Doppelbindungen handelt.

6. Mehrkomponentensystem nach Anspruch 5, **dadurch gekennzeichnet, daß** die Kohlenstoff-Kohlenstoff-Doppelbindungen in (Meth)acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen oder Dicyclopentadienyl-, Norbornenyl-, Isoprenyl-, Isopropenyl-, Allyl- und/oder Butenylestergruppen vorliegen.

7. Mehrkomponentensystem nach einem der Ansprüche 1 bis 6, **dadurch gekennzeichnet, daß** als isocyanatreaktive funktionelle Gruppen Hydroxyl, Amino- und/oder Thiolgruppen verwendet werden.

8. Mehrkomponentensystem nach Anspruch 7, **dadurch gekennzeichnet, daß** Hydroxylgruppen verwendet werden.

9. Mehrkomponentensystem nach einem der Ansprüche 1 bis 8, **dadurch gekennzeichnet, daß** es mindestens einen plättchenförmigen und mindestens einen nichtplättchenförmigen anorganischen Füllstoff enthält.

10. Mehrkomponentensystem nach einem der Ansprüche 1 bis 9, **dadurch gekennzeichnet, daß** es mindestens ein elektrisch leitfähiges Pigment und/oder mindestens einen elektrisch leitfähigen Füllstoff enthalten.

11. Verwendung des Mehrkomponentensystems gemäß einem der Ansprüche 1 bis 10 für die Grundierung von Kunststoffteilen.

12. Verwendung nach Anspruch 11, **dadurch gekennzeichnet, daß** es sich bei den Kunststoffteilen um Kraftfahrzeugkarosserien oder Teilen hiervon handelt.

## Claims

1. Multicomponent system curable thermally and with actinic radiation, comprising
A) an isocyanate-reactive binder component comprising
A1) at least one unsaturated polyester whose molecule contains on average at least one group that can be activated with actinic radiation, of the formulae I, II and/or III 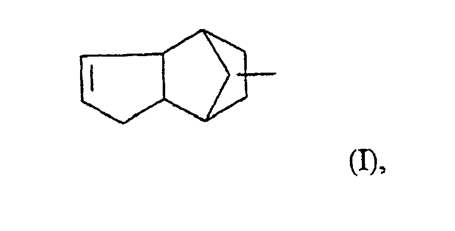 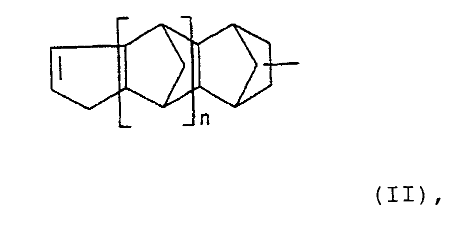 in which the index n is an integer from 1 to 10; 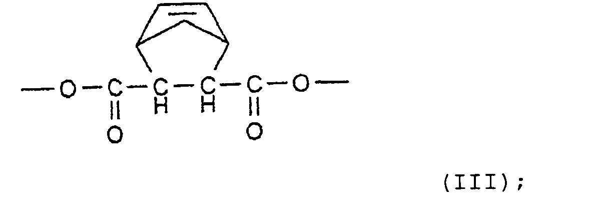 and
A2) at least one binder, different from the polyester (A1), whose molecule comprises on average at least two isocyanate-reactive functional groups,
and/or
A3) at least one binder, different from the polyester (A1), whose molecule comprises on average at least one isocyanate-reactive functional group and at least one reactive functional group having at least one bond that can be activated with actinic radiation,
and
B) a crosslinker component comprising
B1) at least one polyisocyanate and/or
B2) at least one polyisocyanate whose molecule comprises on average at least one reactive functional group having at least one bond that can be activated with actinic radiation.

2. Multicomponent system according to Claim 1, **characterized in that** the binder component (A) comprises at least one reactive diluent curable thermally.

3. Multicomponent system according to Claim 1 or 2, **characterized in that** the binder component (A) and/or the crosslinker component (B) comprise/comprises at least one reactive diluent that can be activated with actinic radiation.

4. Multicomponent system according to any of Claims 1 to 3, **characterized in that** the bonds that can be activated with actinic radiation comprise carbon-hydrogen single bonds or carbon-carbon, carbon-oxygen, carbon-nitrogen, carbon-phosphorus or carbon-silicon single bonds or double bonds, especially carbon-carbon double bonds.

5. Multicomponent system according to Claim 4, **characterized in that** the bonds that can be activated with actinic radiation comprise carbon-carbon double bonds.

6. Multicomponent system according to Claim 5, **characterized in that** the carbon-carbon double bonds are present in (meth)acrylate, ethacrylate, crotonate, cinnamate, vinyl ether, vinyl ester, dicyclopentadienyl, norbornenyl, isoprenyl, isopropenyl, allyl and/or butenyl groups; dicyclopentadienyl, norbornenyl, isoprenyl, isopropenyl, allyl and/or butenyl ether groups, or dicyclopentadienyl, norbornenyl, isoprenyl, isopropenyl, allyl and/or butenyl ester groups.

7. Multicomponent system according to any of Claims 1 to 6, **characterized in that** hydroxyl, amino and/or thiol groups are used as isocyanate-reactive functional groups.

8. Multicomponent system according to Claim 7, **characterized in that** hydroxyl groups are used.

9. Multicomponent system according to any of Claims 1 to 8, **characterized in that** it comprises at least one platelet-shaped and at least one nonplatelet-shaped inorganic filler.

10. Multicomponent system according to any of Claims 1 to 9, **characterized in that** it comprises at least one electrically conductive pigment and/or at least one electrically conductive filler.

11. Use of the multicomponent system according to any of Claims 1 to 10 for priming plastics parts.

12. Use according to Claim 11, **characterized in that** said plastics parts comprise motor vehicle bodies or parts thereof.

## Revendications

1. Système multicomposant durcissable à la chaleur et par rayonnement actinique, contenant
A) un composant liant réactif aux isocyanates, contenant
A1) au moins un polyester insaturé, qui contient en moyenne statistique au moins un groupe activable par rayonnement actinique, des formules I, II et/ou III 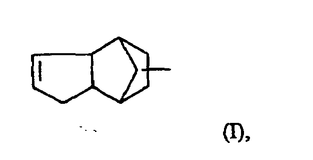 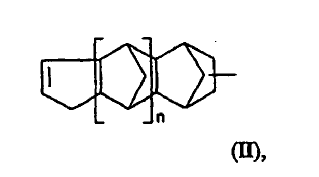 où l'indice n est un nombre entier de 1 à 10, 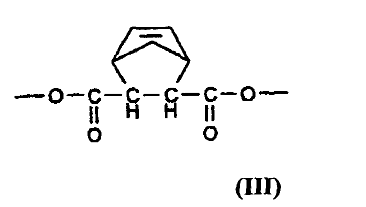 par molécule, ainsi que
A2) au moins un liant différent du polyester (A1), et qui contient en moyenne statistique au moins deux groupes fonctionnels réactifs vis-à-vis des isocyanates par molécule,
et/ou
A3) au moins un liant différent du polyester (A1), et qui contient en moyenne statistique au moins un groupe fonctionnel réactif vis-à-vis des isocyanates et au moins un groupe fonctionnel réactif comportant au moins une liaison activable par un rayonnement actinique par molécule,
et
B) un composant réticulant, contenant
B1) au moins un polyisocyanate et/ou
B2) au moins un polyisocyanate qui contient, en moyenne statistique, au moins un groupe fonctionnel réactif avec au moins une liaison activable par un rayonnement actinique par molécule.

2. Système multicomposant selon la revendication 1, **caractérisé en ce que** le composant liant (A) contient au moins un diluant réactif durcissable à la chaleur.

3. Système multicomposant selon la revendication 1 ou 2, **caractérisé en ce que** le composant liant (A) et/ou le composant réticulant (B) contien(nen)t au moins un diluant réactif activable par un rayonnement actinique.

4. Système multicomposant selon l'une quelconque des revendications 1 à 3, **caractérisé en ce que** les liaisons activables par un rayonnement actinique sont des liaisons simples carbone - hydrogène ou des liaisons simples ou des doubles liaisons carbone - carbone, carbone - oxygène, carbone - azote, carbone - phosphore ou carbone - silicium, en particulier des doubles liaisons carbone - carbone.

5. Système multicomposant selon la revendication 4, **caractérisé en ce que** les liaisons activables par un rayonnement actinique sont des doubles liaisons carbone - carbone.

6. Système multicomposant selon la revendication 5, **caractérisé en ce que** les doubles liaisons carbone - carbone sont présentes dans des groupements (méth)acrylate, éthacrylate, crotonate, cinnamate, vinyléther, vinylester, dicyclopentadiényle, norbornényle, isoprényle, isopropényle, allyle et /ou butényle, des groupements éther dicyclopentadiénylique, norbornénylique, isoprénylique, isopropénylique, allylique et /ou buténylique ou des groupements ester dicylopentadiénylique, norbornénylique, isoprénylique, isopropénylique, allylique et/ou buténylique.

7. Système multicomposant selon l'une quelconque des revendications 1 à 6, **caractérisé en ce que** l'on utilise en tant que groupes fonctionnels réactifs aux isocyanates des groupements hydroxyle, amino et/ou thiol.

8. Système multicomposant selon la revendication 7, **caractérisé en ce que** l'on utilise des groupements hydroxyle.

9. Système multicomposant selon l'une quelconque des revendications 1 à 8, **caractérisé en ce qu'**il contient au moins une charge inorganique lamellaire et au moins une charge inorganique non lamellaire.

10. Système multicomposant selon l'une quelconque des revendications 1 à 9, **caractérisé en ce qu'**il contient au moins un pigment électriquement conducteur et/ou au moins une charge électriquement conductrice.

11. Utilisation du système multicomposant selon l'une quelconque des revendications 1 à 10 comme apprêt pour des pièces en matière plastique.

12. Utilisation selon la revendication 11, **caractérisée en ce que** les pièces en matière plastique sont des carrosseries de véhicules automobiles ou des éléments de celles-ci.
